# EUROPEAN PATENT SPECIFICATION

(11) **EP 3 302 042 B1**
(45) Date of publication and mention of the grant of the patent: **10.07.2019**
(21) Application number: 16738567.3
(22) Date of filing: 06.05.2016
(51) Int. Cl.: A01K 11/00, A01K 29/00, G09F 3/20

(54) **IDENTIFYING LABEL FOR PETS**
IDENTIFIZIERUNGSETIKETT FÜR HAUSTIERE
ÉTIQUETTE D'IDENTIFICATION POUR ANIMAUX DE COMPAGNIE

(30) Priority: 26.05.2015 IT UB20150756
(43) Date of publication of application: 11.04.2018
(73) Proprietor: Eagles Engineering S.r.L., 10073 Cirei' (TO) (IT)
(72) Inventor: ALLASÍNA, Roberto, 10073 Cirei' (TO) (IT); ALLASÍNA, Riccardo, 10073 Cirei' (TO) (IT)
(74) Representative: Garavelli, Paolo
(86) International application number: PCT/IT2016/000118
(87) International publication number: WO 2016/189558

(56) References cited:
- JP-A- 2001 061 364
- US-A- 5 414 948
- US-A- 5 429 393
- US-A1- 2002 005 048
- US-A1- 2013 192 526
- US-B1- 6 568 354

## Description

The present invention refers to an identifying label for pets, in particular for pets such as dogs and cats.

In several Countries, legal standards provide that pets, and specifically dogs, are equipped with permanent identifying means. In the past, such identifying means were made as a tattoo; currently, they comprise a microchip inserted under the skin.

However, the detection of data associated with such microchip requires the use of complext devices and data bases, in which data obtained by such microchip are associated with data of the pet's owner, are not accessible to the public. Therefore, in case a pet is lost, to be able to discover its owner and contact him, it is necessary to ask for the intervention of competent authorities, for example health authorities.

For this reason, identifying labels to be applied to the collar of pets are nowadays widely used.

In general, these labels include essential data about the pet and its owner (name, address, telephone number) and, due to them, in case of loss, anyone who finds the lost pet is able to directly and quickly contact its owner.

Usually, such identifying labels are made of metal and data about pet and/or its owner are included on the label by etching, or printed on paper.

However, this type of etched identifying labels or lables with sheets of paper has a series of inconveniences.

Firstly, etching of data on the metallic label requires the use of suitable machines and often shops selling articles for pets which sell labels have not such machines available. Therefore, once the owner of a pet has purchased a label, this one is sent to an etching person, is etched, given back to the shop and delivered to the purchaser.

It follows that, in the majority of cases, the purchaser does not immediately receive the etched label, but has to wait for some days or weeks and then go back again to the place of purchase to recover the end product.

Secondly, identifying labels are continuously subjected to impacts, scratches and abrasions, especially in case of pets living outside, and this brings about a quick deterioration of quality and readability of included data.

Such inconvenience is particularly severe thinking that the major relevant and useful data included on the identifying label is the phone number of the owner: an even partial deterioration of the etching can make the phone number digits difficult to read and can create ambiguities which risk of making the operations to contact the pet's owner cumbersome in case of need.

Thirdly, it is clear that the sizes of these identifying labels are limited by the comfort of the pet, since too encumbrant and/or too heavy an object hanging from the collar could be a strong nuisance for the pet.

The small label sizes consequently impose a limitation on the amount of information that can be included therein and limit the width of the characters with which such information can be etched, thereby limiting their readability.

As alternative to the traditional etched metallic identifying labels mentioned above, it has been proposed to use plastic tags comprising a transparent window, in which a support can be inserted which includes data about pet and its owner, wholly similar to those used for trunks or packs of keys.

This alternative, however, appears scarcely satisfactory in terms of length, resistance and readability.

Finally, the small paper sheets inserted in the labels are subjected to wear and can be easily lost, requiring a new printing.

JP-A-2001 061364, US-A1-2013/192526, US-B1-6 568 354, US-A-5 429 393, US-A1-2002/005048 and US- A-5 414 948 disclose labels according to the preamble of claim 1.

Object of the present invention is solving the above prior art problems, by providing an identifying label for pets which is resistant and which, at the same time, allows an easy reading of data included therein.

The above and other objects and advantages of the invention, as will appear from the following description, are obtained with an identifying label for pets as claimed in Claim 1. Preferred embodiments and non-trivial variations of the present invention are the subject matter of the dependent claims.

It is intended that all enclosed claims are an integral part of the present description.

The present invention will be better described by some preferred embodiments thereof, provided as a non-limiting example, with reference to the enclosed drawings, in which:

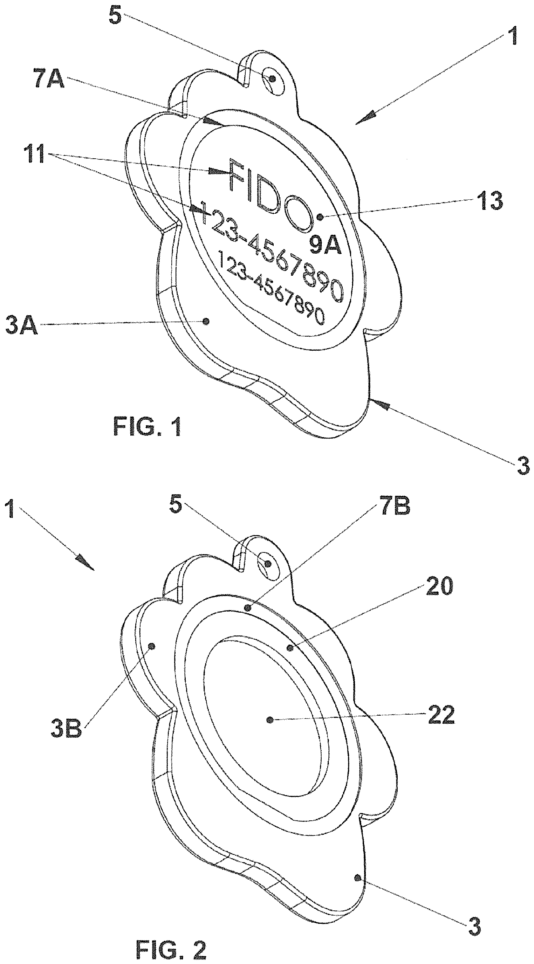

- Figure 1 is a front perspective view of a first side of an identifying label according to the invention; and
- Figure 2 is a front perspective view of a second side of the identifying label of Figure 1.

With reference to the Figures, a preferred embodiment of the identifying label for pets of the present invention is shown and described. It will be immediately obvious that numerous variations and modifications (for example related to shape, sizes, arrangements and parts with equivalent functionality) could be made to what is described, without departing from the scope of the invention as appears from the enclosed claims.

With reference to the Figures as a non-limiting example, an identifying label for pets, for example dogs or cats, according to the invention is described, designated as a whole by reference number 1.

The identifying label 1 comprises a substantially plane body 3, equipped with means for the connection to a collar or the like, for example with a hole 5 for passing a metallic ring therein.

The body 3 can have any shape and can, for example, have a simple geometric shape (circle, rectangle, etc.), or a more complex and aesthetically pleasing shape (imprint of a dog or a cat, as in the example show, bone, heart, etc.).

The body 3 is preferably made of metal, but any material which is rigid enough can be used as well.

According to the invention, the label 1 comprises:
- a first seat 7a, obtained on a first face 3a of the body 3, in which a first support 9a is arranged, made of aluminum-enriched PVC for including first identifying data 11 of the pet and/or its owner;
- a second seat 7b, obtained on a second face 3b of the body 3, in which a second support is arranged, made of aluminum-enriched PVC for including second identifying data 11 of the pet and/or its owner;
- a first covering element 13 which covers the first seat 7a and the first support 9A arranged therein and which comprises a magnifying lens which partially or wholly composes the first covering element 13;
- a second covering element which covers the second seat 7b and the second support arranged therein and which comprises a magnifying lens which partially or wholly composes the second covering element; and
- a seat 22 containing at least one sensor element for sensing the life or environmental conditions of the pet, and at least one transmitting element adapted to transmit data related to detected life or environmental conditions, and data related to the pet position.

Data 11 could comprise for example:
- the pet's name;
- the owner's name and surname;
- the owner's address;
- one or more owner's phone numbers;
- the real pet photo.

Due to the fact that the support 9A for data 11 is a support made of aluminium-enriched PVC, such data can be printed thereon through any printer of a known type, with which any shop can be equipped.

Due to the presence of the covering element 13, the support 9A is advantageously protected from scratches and abrasions, in addition to weather agents. And due to the presence of the magnifying lens, data 11 included on the support 9A will be magnified and therefore more easily readable. It will therefore be possible to reduce the width of the characters of data 11 without impairing their readability.

It will then be possible, if one so desires, to include on the support 9A a greater amount of data; for example, it will be possible to insert an additional phone number, or synthetically include important information for those who happen to find the pet in case of loss ("it is afraid of thunders", "it is allergic to fishes", "it suffers from epilepsy", and other similar messages).

The magnifying lens of the covering element 13 can be made of any material and shape which are optically suitable to magnify the data below.

The identifying label 1 can further be equipped, in its seat 7a or 7b, with a further reinforcing frame 20 made of aluminium.

In a preferred embodiment of the invention, the covering element 13 is made by using a suitable resin and is shaped in order to have a lower plane surface to engage the seat 7a or 7b and an upper convex surface to provide an optical magnification effect.

The use of a resin implies important advantages (with respect, for example, to glass) in terms of resistance to impacts and to scratches, and avoids the risk of formation of cracks or notches which could impair the readability of data on the support 9A below.

As an example, in order to make the covering element 13, a two-component polyurethane resin, containing polyol and isocyanate, could be used.

The magnifying lens of the covering element 13 can be neutral, but also coloured or fluorescent, which allow conferring a particular aesthetic appearance to the identifying label 1.

The covering element 13 can be fastened in the seat 7a, 7b of the body 3 movably or unmovably.

In the first case, there is the advantage that, in case of variation of one or more of the data 11 included in the support 9A, it will not be necessary to completely replace the label 1, but it will be possible to replace only the support with a new support containing the updated data 11.

In the second case, there will be the advantage of completely removing the risk of an accidental detachment from the label 1 (and consequent loss) of the covering element 13.

The supports made of aluminium-enriched PVC are long-lasting, do not lose data printed thereon and allow obtaining the objects for which the present invention has been devised.

The sensor elements could be of various types, for example of cardiac or respiration functions, or of environmental conditions such as temperature or humidity, and provide data which, suitably processed by programs with which the owner is equipped (for example in his own personal computer or cellular phone), allow having a first evaluation about the status of the pet or the environment in which the pet is.

Similarly, a program owned by the owner allows processing the signals transmitted by the transmitting element (both those supplied by the sensors, and those supplied by a position detector of the GPS type) and generate warning or alarm signals, if the threshold values of the quantities detected by the sensors are exceeded, or if the pet goes away too much from its owner, or in such a way that the owner can easily locate the pet at any time.

## Claims

1. Identifying label (1) for pets having an owner, comprising a body (3) made of rigid and substantially plane material, comprising:
- a first seat (7a), obtained on a first face (3a) of said body (3), in which a first support (9A) is arranged for including first identifying data (11) of said pet and/or said owner;
- a second seat (7b), obtained on a second face (3b) of said body (3), in which a second support is arranged for including second identifying data (11) of said pet and/or said owner;
- a first covering element (13) which covers said first seat (7a) and said first support (9A) arranged therein and which comprises a magnifying lens which partially or wholly composes the first covering element (13);
- a second covering element which covers said second seat (7b) and said second support arranged therein and which comprises a magnifying lens which partially or wholly composes the second covering element;
**characterized in that** said first support and said second support are made of aluminum-enriched PVC, and **in that** the identifying label (1) further includes:
- a seat (22) containing at least one sensor element for life or environmental conditions of said pet, and at least one transmitting element adapted to transmit data related to detected life or environmental conditions, and data related to a position of said pet.

2. Identifying label (1) according to claim 1, **characterized in that** said first (11) and said second identifying data are personal and/or photographic data of a user or owner of said identifying label (1).

3. Identifying label (1) according to claim 1 or 2, **characterized in that** said transmitting element is of the GPS type.

4. Identifying label (1) according to claim 1, 2 or 3, **characterized in that** said first (13) and said second covering elements are elements made of resin and shaped in order to have a lower plane surface and an upper convex surface.

5. Identifying label (1) according to any one of the previous claims, **characterized in that** said first (13) and said second covering elements are fastened to said body (3) next to said seats (7a, 7b) movably.

6. Identifying label (1) according to any one of claims 1 to 4, **characterized in that** said first (13) and said second covering elements are fastened to said body (3) next to said seats (7a, 7b) unmovably.

7. Identifying label (1) according to any one of the previous claims, **characterized in that** said body (3) is a metallic body equipped with means for the connection to a collar or the like, such as for example a hole (5) for passing a metallic ring therein.

8. Identifying label (1) according to any one of the previous claims, **characterized in that** it is further equipped, in its seat (7a ,7b), with a reinforcing frame (20) made of aluminum.

## Patentansprüche

1. Tiermarke (1) für Haustiere, die einen Besitzer haben, mit einem Körper (3), der aus hartem und grundlegend flachem Material hergestellt ist, welche Folgendes enthält:
- eine erste Aufnahme (7a), die auf einer ersten Seite (3a) des genannten Körpers (3) erhalten wird, in der eine erste Halterung (9A) angebracht wird, um die Kenndaten (11) des genannten Tieres und/oder des genannten Besitzers anzugeben;
- eine zweite Aufnahme (7b), die auf einer zweiten Seite (3b) des genannten Körpers (3) erhalten wird, in der eine zweite Halterung angebracht wird, um die Kenndaten (11) des genannten Tieres und/oder des genannten Besitzers anzugeben;
- ein erstes Abdeckelement (13), das die genannte erste Aufnahme (7a) und die genannte erste Halterung (9A), die in dieser angebracht ist, abdeckt, und das eine Vergrößerungslinse enthält, die teilweise oder vollständig das erste Abdeckelement (13) darstellt;
- ein zweites Abdeckelement, das die genannte zweite Aufnahme (7b) und die genannte zweite Halterung, die in dieser angebracht ist, abdeckt, und das eine Vergrößerungslinse enthält, die teilweise oder vollständig das zweite Abdeckelement darstellt;
und die **dadurch gekennzeichnet ist, dass** die genannte erste Halterung und die genannte zweite Halterung aus aluminiumangereichertem PVC hergestellt sind und dadurch, dass die genannte Tiermarke (1) außerdem Folgendes enthält:
- eine Aufnahme (22), die mindestens ein Sensorelement der Lebens- oder Umgebungsbedingungen des genannten Tieres enthält, und mindestens ein Sendelement, das dazu dient, die entsprechenden Daten über die erfassten Lebens- oder Umgebungsbedingungen und die Positionsdaten des genannten Tieres zu senden.

2. Tiermarke (1) gemäß Patentanspruch 1, die **dadurch gekennzeichnet ist, dass** die genannten ersten (11) und die genannten zweiten Kenndaten Personaldaten und/oder fotografische Daten des Anwenders oder Besitzers der Tiermarke (1) sind.

3. Tiermarke (1) gemäß Patentanspruch 1, die **dadurch gekennzeichnet ist, dass** das genannte Sendeelement ein GPS-Element ist.

4. Tiermarke (1) gemäß Patentanspruch 1, 2 oder 3, die **dadurch gekennzeichnet ist, dass** das genannte erste (13) und das genannte zweite Abdeckelement Elemente sind, die aus Harz hergestellt und so gestaltet wurden, dass sie eine untere ebene Fläche und eine obere konvexe Fläche aufweisen.

5. Tiermarke (1) gemäß einem beliebigen der vorhergehenden Patentansprüche, die **dadurch gekennzeichnet ist, dass** das genannte erste (13) und das genannte zweite Abdeckelement am genannten Körper (3) an den genannten Aufnahmen (7a, 7b) abnehmbar befestigt sind.

6. Tiermarke (1) gemäß einem beliebigen der Patentansprüche, von 1 bis 4, die **dadurch gekennzeichnet ist, dass** das genannte erste (13) und das genannte zweite Abdeckelement am genannten Körper (3) an den genannten Aufnahmen (7a, 7b) nicht abnehmbar befestigt sind.

7. Tiermarke (1) gemäß einem beliebigen der vorhergehenden Patentansprüche, die **dadurch gekennzeichnet ist, dass** der genannte Körper (3) ein Metallkörper ist, der mit Mitteln für die Verbindung mit einem Halsband o. ä. ausgestattet ist, wie zum Beispiel ein Loch (5) für die Durchführung eines Metallrings.

8. Tiermarke (1) gemäß einem beliebigen der vorhergehenden Patentansprüche, die **dadurch gekennzeichnet ist, dass** sie außerdem in ihrer Aufnahme (7a, 7b) mit einem Verstärkungsrahmen (20 aus Aluminium ausgestattet ist.

## Revendications

1. Plaque d'identification (1) pour animaux domestiques ayant un propriétaire, comprenant un corps (3) réalisé en matière rigide et substantiellement plat constitué de :
- un premier siège (7a), situé sur la première face (3a) du corps (3), où se trouve un premier support (9A) indiquant les premières données d'identification (11) de l'animal et/ou du propriétaire ;
- un second siège (7b), situé sur la deuxième face (3b) du corps (3), où se trouve un second support indiquant les secondes données d'identification (11) de l'animal et/ou du propriétaire ;
- un premier élément de couverture (13) qui couvre le premier siège (7a) et le premier support (9A) et qui comprend une loupe qui constitue partiellement ou entièrement le premier élément de couverture (13) ;
- un second élément de couverture qui couvre le second siège (7b) et le second support et qui comprend une loupe qui constitue partiellement ou entièrement le second élément de couverture ;
**caractérisé en ce que** le premier et le second support sont en PVC enrichi d'aluminium et **en ce que** la plaque d'identification (1) comprend aussi :
- un siège (22) contenant au moins un élément capteur des conditions vitales ou environnementales de l'animal et au moins un élément émetteur apte à émettre les données relatives aux conditions vitales ou environnementales relevées, ainsi que les données relatives à la position de l'animal.

2. Plaque d'identification (1), selon la revendication 1, **caractérisée en ce que** les premières (11) et secondes données d'identification sont des données personnelles et/ou photographiques de l'utilisateur ou du propriétaire de la plaque d'identification (1).

3. Plaque d'identification (1), selon la revendication 1 ou 2, **caractérisée en ce que** l'élément émetteur est du type GPS.

4. Plaque d'identification (1), selon la revendication 1, 2 ou 3, **caractérisée en ce que** le premier (13) et le second élément de couverture sont réalisés en résine et conformés de sorte à présenter une surface inférieure plate et une surface supérieure convexe.

5. Plaque d'identification (1), selon l'une des revendications précédentes, **caractérisée en ce que** le premier (13) et le second élément de couverture sont fixés au corps (3) au niveau des sièges (7a, 7b) de manière amovible.

6. Plaque d'identification (1), selon l'une des revendications de 1 à 4, **caractérisée en ce que** le premier (13) et le second élément de couverture sont fixés au corps (3) au niveau des sièges (7a, 7b) de manière inamovible.

7. Plaque d'identification (1), selon l'une des revendications précédentes, **caractérisée en ce que** le corps (3) est un corps en métal pourvu de moyens pour se relier à un collier ou similaire, par exemple un trou (5) pour passer un anneau en métal.

8. Plaque d'identification (1), selon l'une des revendications précédentes, **caractérisée en ce qu'**elle est aussi dotée, dans son siège (7a, 7b), d'un cadre de renfort (20) en aluminium.
